# EUROPEAN PATENT SPECIFICATION

(11) **EP 1 068 786 B1**
(45) Date of publication and mention of the grant of the patent: **26.05.2004**
(21) Application number: 00114128.2
(22) Date of filing: 11.07.2000
(51) Int. Cl.: A01D 34/64, A01B 59/048, A01B 63/108

(54) **Gardening vehicle such as lawn-mowers or the like**
Gartenarbeitsgerät wie Rasenmäher oder dergleichen
Outil de jardinage tel que tondeuse à gazon ou similaire

(30) Priority: 15.07.1999 IT PD990167
(43) Date of publication of application: 17.01.2001
(73) Proprietor: ANTONIO CARRARO S.p.A., 35011 Campodarsego (Padova) (IT)
(72) Inventor: Martignon, Girolamo, 35010 Borgoricco (Padova) (IT)
(74) Representative: Modiano, Guido, Dr.-Ing.

(56) References cited:
- EP-A- 0 456 900
- DE-A- 19 602 223
- FR-A- 2 086 286
- FR-A- 2 608 006
- FR-A- 2 627 660
- US-A- 4 384 444
- US-A- 5 381 647

## Description

The present invention relates to a gardening vehicle, such as lawn-mowers or the like.

It is known that in the field of gardening work vehicles, such as lawn-mowers or the like are currently used, which relieve their operators of tasks which are physically very tiring, increasing the productivity and precision of many tasks.

In particular, and merely by way of example, lawn-mowers are currently widely used which are substantially constituted by self-propelled vehicles provided with rotary-blade tools.

These tools generally have a flattened outline, are provided with ground resting wheels and are installed on lifting units which are rigidly coupled to the vehicles.

The coupling to these units is articulated, in order to provide a certain freedom of motion and be able to follow the unevenness of the ground.

However, the freedom of motion is very limited and unable to adapt to all operating situations.

Notwithstanding the variety of embodiments, the lifting units substantially comprise an actuation section which is fixed to the vehicle chassis and is connected to a lifting section.

The working fulcrum of the actuation section and the lifting actuators are normally located in front of the front axle of the vehicle, adjacent to the working area of the lifting section, and therefore the lifting angle is not large and is indeed insufficient to cope with obstacles.

The actuators of the actuation section further act by compression, i.e., they are compressed during the active lifting step.

This configuration of the lifting unit entails less than optimum efficiency regarding the lifting force.

The actuators, by acting by compression, are in fact unable to develop their full potential during the active lifting step.

FR-A-2667660 discloses a gardening vehicle with tool lifting unit having a combination of features as set forth in the precharacterizing portion of the appended claim 1.

The aim of the present invention is to provide a gardening vehicle, such as lawn-mowers or the like, whose structure allows to eliminate the drawbacks noted above of conventional units.

Within the scope of this aim, an object of the present invention is to be able to make the tool follow the ground closely, pass any obstacles without problems and to make the installed actuators work in an optimum manner during the active lifting step.

Another object of the present invention is to provide a lifting unit whose structure is sturdy, functionally flexible and entirely free of risks for the operator.

Another object of the present invention is to provide a lifting unit whose structure can be adapted to the most disparate types of vehicle, possibly even already commercially available ones.

Another object of the present invention is to provide a lifting unit which is particularly flexible in terms of application and simple to use for the operator.

Another object of the present invention is to provide a lifting unit whose structure allows production at competitive costs with respect to units having the same operating capabilities and by using conventional equipment and technologies.

In accordance with the invention, there is provided a gardening vehicle as defined in the appended claims.

Further characteristics and advantages of the present invention will become better apparent from the following detailed description of an embodiment thereof, illustrated only by way of non-limitative example in the accompanying drawings, wherein:
Figure 1 is a side view of a lifting unit having the structure according to the invention, applied to a lawn-mower vehicle;
Figure 2 is a plan view of the unit of Figure 1;
Figure 3 is a partially sectional elevational view of the unit of Figure 1;
Figure 4 is a view of a detail of the unit of Figure 1;
Figure 5 is a view of a detail of the unit of Figure 1;
Figures 6 and 7 are two views of an articulated coupling provided in the unit of Figure 1.

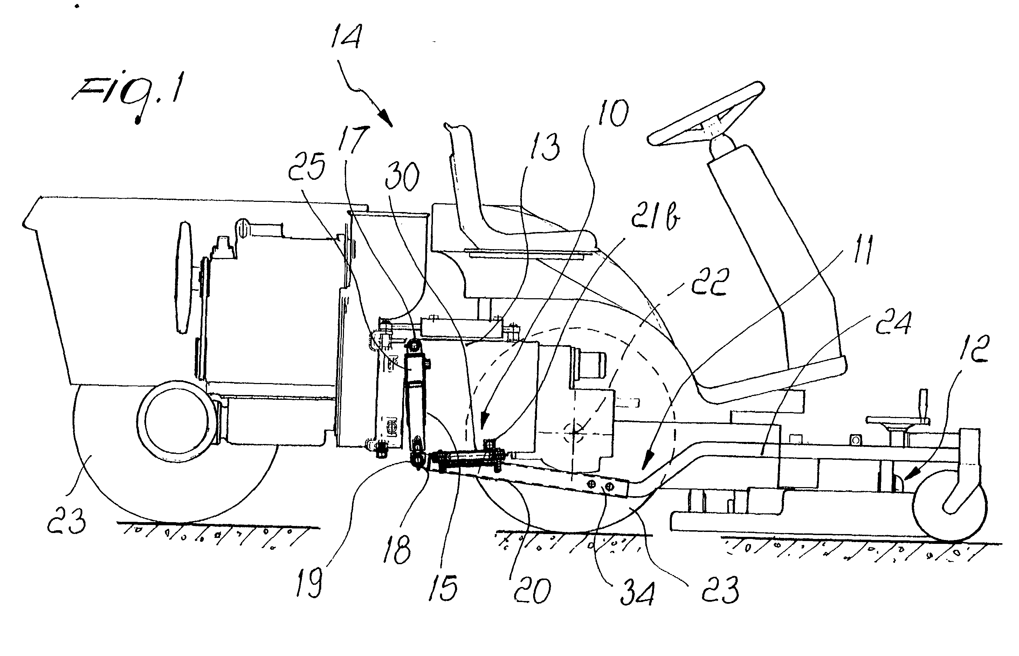

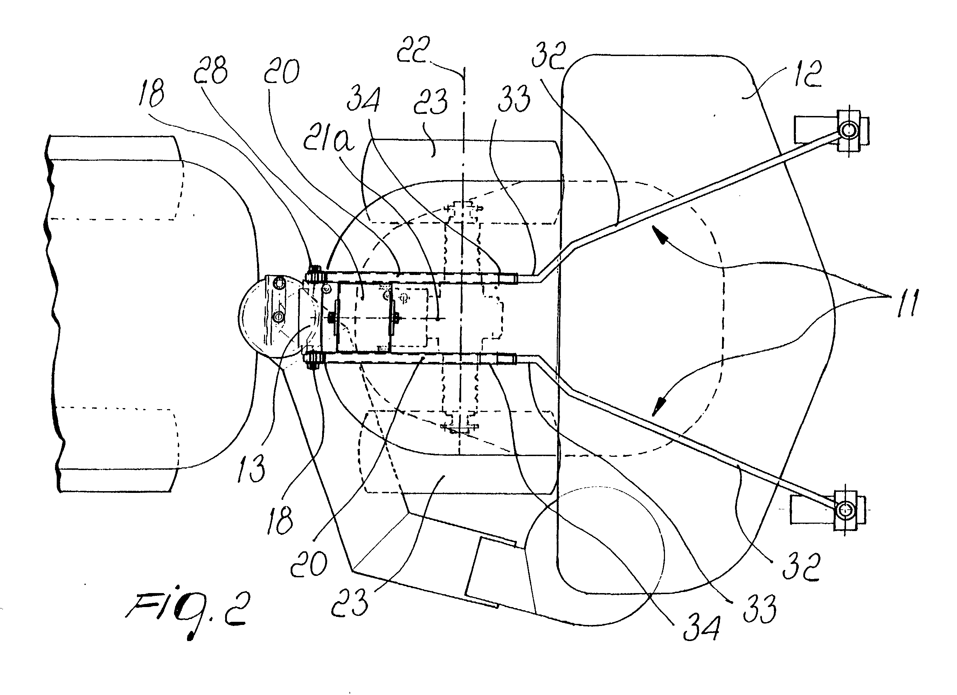

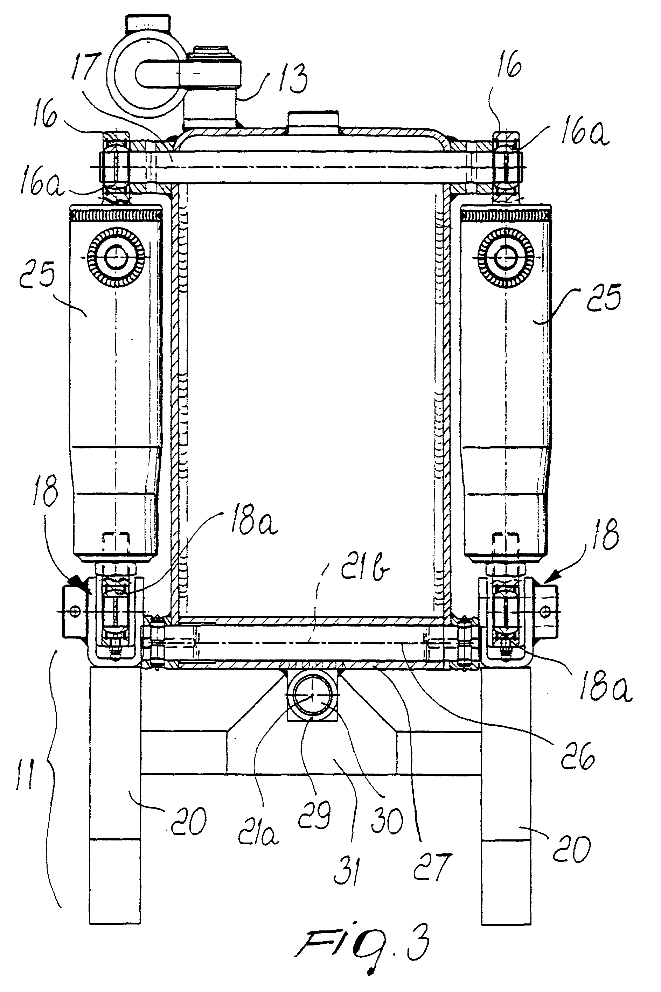

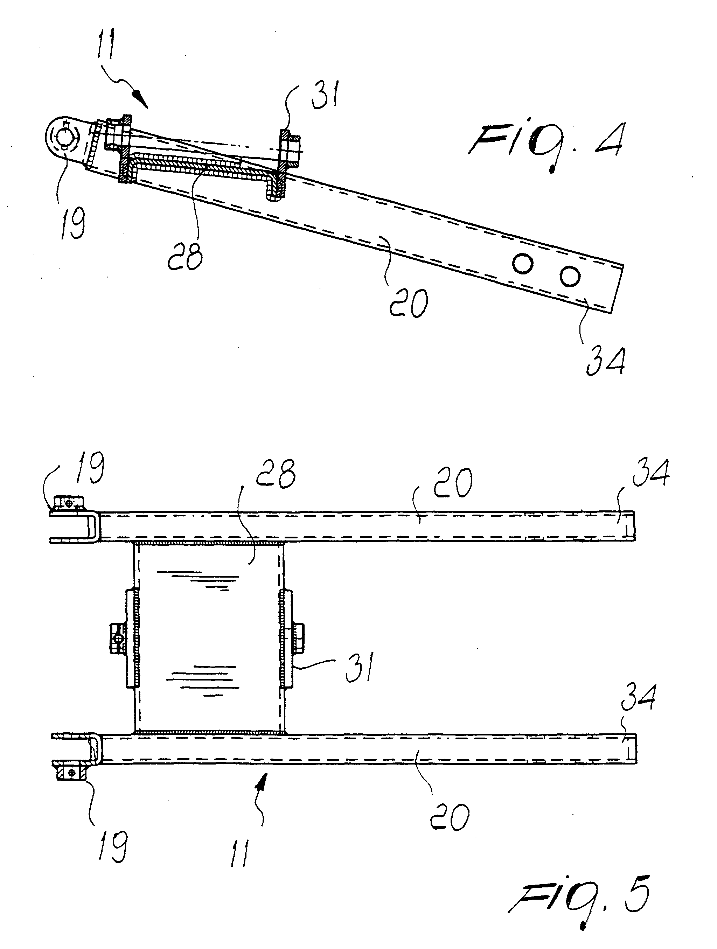

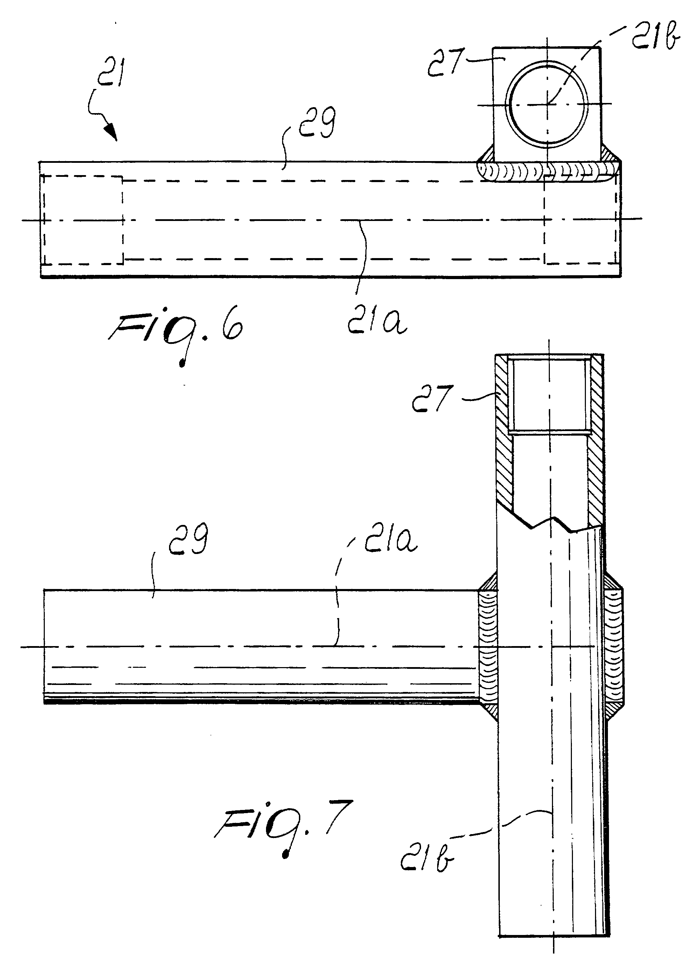

With particular reference to Figures 1 to 7, a tool lifting unit for gardening vehicles such as lawn-mowers or the like having the structure according to the invention is generally designated by the reference numeral 10.

The unit 10 comprises a lever-like frame 11 which supports a tool 12 (in this case of the rotary-blade type, whose protective housing is only visible in the figures) and is fixed to a chassis 13 of a vehicle which is generally designated by the reference numeral 14 in the figures.

The unit 10 comprises, in this case, two parallel actuators 15, each of which has an end 16 which is fixed, with a ball joint 16a interposed, to a common first shaft 17 which is connected to the chassis 13 of the vehicle 14, while the other end, designated by the reference numeral 18, is pivoted, also with a ball joint 18a interposed, to the corresponding end 19 of a corresponding first bracket 20 of the frame 11 which has an articulated cross-shaped coupling 21 which is pivoted to the chassis 13 along a longitudinal axis 21a and a transverse axis 21b, to the rear with respect to an axle 22 (shown in dashed lines in the figures) of the front wheels of the vehicle, which are designated by the reference numeral 23.

According to the invention, a first-class lever (with the fulcrum between the force and the load) is formed with the frame 11 that supports the tool 12, the fulcrum being located to the rear of the axle 22.

In particular, the two actuators 15 are arranged substantially at right angles to and above the first brackets 20 of the frame 11 so as to lift the tool 12 when they are extending.

In particular, in this case the actuators 15 are constituted by a corresponding number of hydraulic or pneumatic cylinders 25.

Moreover, the two first brackets 20 are pivoted, about the axis 21b, by means of a shaft 26 which is inserted in a first tubular element 27 which belongs to the articulated-cross coupling 21.

The first brackets 20 are constituted, in this case, by longitudinal elements which have a rectangular cross-section and are mutually connected by a welded C-shaped element which is designated by the reference numeral 28 and is part of the frame 11; a second element 31 is fixed thereto and a third shaft 30 is inserted in said second element, said third shaft being arranged along the axis 21a at right angles to the fulcrum formed by said second shaft 26.

In this embodiment, the element 27 of the coupling 21 is fixed to the other element 29 by means of bracing plates 31 which are in turn fixed to said welded C-shaped element 28.

Two second brackets 32 are fixed to the first brackets 20 and the tool 12 is fixed thereto; their ends 33 are inserted and locked in corresponding ends 34 of said first brackets.

In practice it has been observed that the present invention has achieved the intended aim and objects.

In particular it should be noted that the unit according to the invention allows a considerable tool lifting angle, greater than in conventional units, and allows the actuators to operate in an optimum manner, extending when they produce the corresponding lifting of the tool.

In this manner an overall kinematic and dynamic improvement of the entire structure of the unit is achieved.

The entire unit can further oscillate about the longitudinal axis 21a, owing to the presence of the ball joints 16a and 18a, more significantly than in the prior art (in which only the tool, substantially, can oscillate).

It should be noted that all of the above has been achieved without compromising at all the operating functionality of the unit having the structure according to the invention, which has high operating flexibility and can be applied to the most disparate types of gardening vehicle.

It is also noted that its relative constructive simplicity also leads to an equally great simplicity of use on the part of the operator, while providing considerable operating safety for said operator.

The present invention is susceptible of numerous modifications and variations, all of which are within the scope of the inventive concept.

The technical details may be replaced with other technically equivalent elements.

The materials and the dimensions may be any according to requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A gardening vehicle (14), such as lawn-mowers or the like, comprising a tool lifting unit (10), comprising a lever-like frame (11) which supports a tool (12) and is associated with hydraulic-cylinder lifting actuators (15) which are adapted to be coupled between said frame (11) and a chassis (13) of the vehicle (14), said lever-like frame (11) being coupled to said chassis (13) so as to be able to perform oscillations with respect to a longitudinal axis (21a) of the chassis (13), **characterized in that** said lever-like frame (11) forms a first-class lever in which the fulcrum of the lever is arranged to the rear of, and parallel to, a front axle (22) of said vehicle (14).

2. The gardening vehicle and lifting unit according to claim 1, **characterized in that** said actuators (15) are arranged so as to perform lifting during extension.

3. The gardening vehicle and lifting unit according to claim 1, **characterized in that** said actuators (15) comprise two parallel hydraulic or pneumatic actuators (25), each of which has one end (16) fixed to a common first shaft (17) coupled to said chassis (13) and one end (18) pivoted to said frame (11) that supports the tool (12).

4. The gardening vehicle and lifting unit according to claim 3, **characterized in that** said ends (16,18) are fixed with ball joints (16a,18a) interposed.

5. The gardening vehicle and lifting unit according to claim 1, **characterized in that** said frame (11) comprises first brackets (20) which are pivoted to the chassis (13) of said vehicle (14) by means of a common second shaft (26).

6. The gardening vehicle and lifting unit according to claim 5, **characterized in that** said second shaft (26) is inserted in a first tubular element (27) which belongs to an articulated cross-shaped coupling (21).

7. The gardening vehicle and lifting unit according to claim 5, **characterized in that** said first brackets (20) are constituted by longitudinal elements which have a substantially rectangular transverse cross-section.

8. The gardening vehicle and lifting unit according to claim 6, **characterized in that** said first brackets (20) are mutually connected by means of a welded C-shaped element (28).

9. The gardening vehicle and lifting unit according to claim 8, **characterized in that** it comprises a second tubular element (29) which is fixed to said C-shaped element (28) and in which a third shaft (30) is inserted, said third shaft (30) being adapted to form a fulcrum whose axis is perpendicular to the fulcrum formed by said second shaft (26).

10. The gardening vehicle and lifting unit according to claim 8, **characterized in that** said cross-shaped coupling (21) is constituted by two elements which are mutually fixed by means of bracing plates (31) which are in turn fixed to said C-shaped element (28).

11. The gardening vehicle and lifting unit according to claim 5, **characterized in that** two second brackets (32) are fixed to said first brackets (20), ends (33) of said second brackets (32) being inserted and locked in corresponding ends (34) of said first brackets (20), said second brackets (32) having said tool (12) fixed to them.

## Patentansprüche

1. Gartenfahrzeug (14) wie Rasenmäher oder dergleichen, umfassend eine Werkzeughebeeinheit (10), die einen hebelähnlichen Rahmen (11) umfasst, der ein Werkzeug (12) hält und mit Hydraulikzylinder-Hebebetätigern (15) verbunden ist, die dazu geeignet sind, zwischen dem Rahmen (11) und dem Fahrgestell (13) des Fahrzeugs (14) gekoppelt zu werden, wobei der hebelähnliche Rahmen (11) an das Fahrgestell (13) gekoppelt ist, um so Oszillationen bezüglich einer Längsachse (21a) des Fahrgestells (13) durchführen zu können, **dadurch gekennzeichnet, dass** der hebelähnliche Rahmen (11) einen Hebel erster Klasse bildet, in dem der Drehpunkt des Hebels im hinteren Bereich und parallel zu einer Vorderachse (22) des Fahrzeugs (14) angeordnet ist.

2. Gartenfahrzeug und Hebeleinheit nach Anspruch 1, **dadurch gekennzeichnet, dass** die Betätiger (15) so angeordnet sind, dass sie eine Hebung durchführen, während sie ausfahren.

3. Gartenfahrzeug und Hebeleinheit nach Anspruch 1, **dadurch gekennzeichnet, dass** die Betätiger (15) zwei parallele hydraulische oder pneumatische Betätiger (25) umfassen, von denen jeder ein Ende (16), das an einer gemeinsamen ersten Welle (17) befestigt ist, die an das Fahrgestell (13) gekoppelt ist, und ein Ende (18) hat, das drehbar an dem Rahmen (11) befestigt ist, der das Werkzeug (12) hält.

4. Gartenfahrzeug und Hebeleinheit nach Anspruch 3, **dadurch gekennzeichnet, dass** die Enden (16, 18) mit dazwischen liegenden Kugelgelenken (16a, 18a) befestigt sind.

5. Gartenfahrzeug und Hebeleinheit nach Anspruch 1, **dadurch gekennzeichnet, dass** der Rahmen (11) erste Träger (20) umfasst, die mittels einer gemeinsamen zweiten Welle (26) drehbar an dem Fahrgestell (13) des Fahrzeugs (14) befestigt sind.

6. Gartenfahrzeug und Hebeleinheit nach Anspruch 5, **dadurch gekennzeichnet, dass** die zweite Welle (26) in ein erstes rohrförmiges Element (27) eingesetzt ist, das zu einer angelenkten kreuzförmigen Kupplung (21) gehört.

7. Gartenfahrzeug und Hebeleinheit nach Anspruch 5, **dadurch gekennzeichnet, dass** die ersten Träger (20) aus Längselementen bestehen, die einen im Wesentlichen rechtwinkligen transversalen Querschnitt haben.

8. Gartenfahrzeug und Hebeleinheit nach Anspruch 6, **dadurch gekennzeichnet, dass** die ersten Träger (20) mittels eines geschweißten C-förmigen Elements (28) miteinander verbunden sind.

9. Gartenfahrzeug und Hebeleinheit nach Anspruch 8, **dadurch gekennzeichnet, dass** es ein zweites rohrförmiges Element (29) umfasst, das an dem C-förmigen Element (28) befestigt ist und in das eine dritte Welle (30) eingesetzt ist, wobei die dritte Welle (30) dazu geeignet ist, einen Drehpunkt zu bilden, dessen Achse senkrecht zu dem Drehpunkt ist, der durch die zweite Welle (26) gebildet ist.

10. Gartenfahrzeug und Hebeleinheit nach Anspruch 8, **dadurch gekennzeichnet, dass** die kreuzförmige Kupplung (21) aus zwei Elementen besteht, die mittels Stützplatten (31) miteinander befestigt sind, die wiederum an dem C-förmigen Element (28) befestigt sind.

11. Gartenfahrzeug und Hebeleinheit nach Anspruch 5, **dadurch gekennzeichnet, dass** zwei zweite Träger (32) an den ersten Trägern (20) befestigt sind, wobei Enden (33) der zweiten Träger (32) in entsprechende Enden (34) der ersten Träger (20) eingesetzt und in diesen verriegelt sind, wobei das Werkzeug (12) an den zweiten Trägern (32) befestigt ist.

## Revendications

1. Véhicule de jardinage (14), tel que des tondeuses à gazon ou analogues, comprenant une unité de levage d'outil (10), comprenant un bâti analogue à un levier (11) qui supporte un outil (12) et est associé à des actionneurs de levage à vérin hydraulique (15) qui sont adaptés pour être couplés entre ledit bâti (11) et un châssis (13) du véhicule (14), ledit bâti analogue à un levier (11) étant accouplé audit châssis (13) de façon à pouvoir effectuer des oscillations par rapport à un axe longitudinal (21a) du châssis (13),
**caractérisé en ce que** ledit bâti analogue à un levier (11) forme un levier de première qualité dans lequel le point de pivot du levier est agencé vers l'arrière et parallèlement à un essieu avant (22) dudit véhicule (14).

2. Véhicule de jardinage et unité de levage selon la revendication 1,
**caractérisés en ce que** lesdits actionneurs (15) sont agencés de façon à effectuer le levage durant l'extension.

3. Véhicule de jardinage et unité de levage selon la revendication 1,
**caractérisés en ce que** lesdits actionneurs (15) comprennent deux actionneurs hydrauliques ou pneumatiques parallèles (25), dont chacun a une extrémité (16) fixée à un premier arbre commun (17) accouplé audit châssis (13) et une extrémité (18) montée pivotante sur ledit bâti (11) qui supporte l'outil (12).

4. Véhicule de jardinage et unité de levage selon la revendication 3,
**caractérisés en ce que** lesdites extrémités (16, 18) sont fixées à des joints à rotule (16a, 18a) interposés.

5. Véhicule de jardinage et unité de levage selon la revendication 1,
**caractérisés en ce que** ledit bâti (11) comprend des premiers supports (20) qui sont montés pivotants par rapport au châssis (13) dudit véhicule (14) par l'intermédiaire d'un second arbre commun (26).

6. Véhicule de jardinage et unité de levage selon la revendication 5,
**caractérisés en ce que** ledit second arbre (26) est inséré dans un premier élément tubulaire (27) qui appartient à un accouplement en croix articulé (21).

7. Véhicule de jardinage et unité de levage selon la revendication 5,
**caractérisés en ce que** lesdits premiers supports (20) sont constitués par des éléments longitudinaux qui ont une section transversale sensiblement rectangulaire.

8. Véhicule de jardinage et unité de levage selon la revendication 6,
**caractérisés en ce que** lesdits premiers supports (20) sont mutuellement reliés par l'intermédiaire d'un élément en forme de C soudé (28).

9. Véhicule de jardinage et unité de levage selon la revendication 8,
**caractérisés en ce qu'**il comprend un second élément tubulaire (29) qui est fixé audit élément en forme de C (28) et dans lequel un troisième arbre (30) est inséré, ledit troisième arbre (30) étant adapté pour former un point de pivot dont l'axe est perpendiculaire au point de pivot formé par ledit second arbre (26).

10. Véhicule de jardinage et unité de levage selon la revendication 8,
**caractérisés en ce que** ledit accouplement de forme croisée (21) est constitué par deux éléments qui sont mutuellement fixés par l'intermédiaire de plaques d'entretoisement (31) qui sont à leur tour fixées audit élément en forme de C (28).

11. Véhicule de jardinage et unité de levage selon la revendication 5,
**caractérisés en ce que** deux seconds supports (32) sont fixés auxdits premiers supports (20), des extrémités (33) desdits seconds supports (32) étant insérées et verrouillées dans des extrémités correspondantes (34) desdits premiers supports (20), lesdits seconds supports (32) ayant ledit outil (12) fixé à eux.
